# EUROPEAN PATENT SPECIFICATION

(11) **EP 2 758 840 B1**
(45) Date of publication and mention of the grant of the patent: **02.06.2021**
(21) Application number: 12808860.6
(22) Date of filing: 24.09.2012
(51) Int. Cl.: G05B 23/02, G05B 19/418

(54) **NETWORKING METHOD**
NETZVERBINDUNGSVERFAHREN
PROCÉDÉ DE MISE EN RÉSEAU

(30) Priority: 23.09.2011 US 201161538272 P
(43) Date of publication of application: 30.07.2014
(73) Proprietor: Videojet Technologies, Inc., Wood Dale, IL 60191-1073 (US)
(72) Inventor: TIVEY, Alex, Nottinghamshire (GB); BUCKBY, Steven John, Bleasby, Nottinghamshire NG14 7GG (GB); BUTCHER, James Christopher, Bottesford, Leicestershire NG13 0DS (GB)
(74) Representative: Kenrick, Mark Lloyd
(86) International application number: PCT/GB2012/052358
(87) International publication number: WO 2013/041888

(56) References cited:
- US-A1- 2001 047 213
- US-A1- 2005 155 043
- US-A1- 2010 175 012
- US-B1- 7 539 724

## Description

The present invention relates to industrial apparatus of the type used in a product packaging facility arranged to pack one or more products into one or more packs according to claim 1 and a method for providing remote support for an industrial apparatus according to claim 7. Further embodiments of the invention are set out in the dependent claims.

It is known for industrial printers such as industrial coding and labelling machines to provide a local user interface (for example a touchscreen interface), by which a user of the industrial printer is able to control operation of the industrial printer. Such local interfaces are typically controlled by so-called "native" or "local" software operating on the industrial printer, in order to deliver a responsive user experience. Local interfaces of this type require a user to be in the same location as the industrial printer.

It is also known for industrial printers to be configured to provide a remote interface distinct from the native interface. Often, the remote interface is a so-called "web-interface" which can be accessed by a web-browser over a network such as the Internet. In this way, where a user may not have local access to an industrial printer, that user can nonetheless control aspects of the operation of the industrial printer via the remote interface. In some cases, both the native interface, and the remote interface can be active simultaneously. For example, in the event of a problem with the industrial printer, a local user may request support from a remote user. In this way, a local user (for example on a production line on which the industrial printer is operating) may be providing operational commands to the industrial printer by way of the native interface at the same time as a remote user is providing operational commands to the industrial printer by way of the remote interface. This can lead to, at best unhelpful, and potentially damaging, conflicts in the instructions that are provided to the industrial printer.

This problem is exacerbated where, as is often the case, an industrial printer is installed in a production line without access to telecommunications facilities, such as telephones. As such, in order to communicate with a remote user who is providing support, a local user may need to leave the production line to find a designated 'quite area' providing telephones with which communication with remote users may be achieved. Where local interaction with the industrial printer is required (for example for remedial action, testing or verification of an expected outcome, etc), the local user is required to return to the production line, halting communication with the remote user. This, of course, may need repeating. In addition to being inefficient, requiring the local user to repeatedly leave and return to the industrial printer increases the likelihood that errors, and conflicts between the local and remote user interfaces, may occur.

US 7539724 B1 describes systems and methods for distributing control information such as event notifications and status in a substantially real time manner. Such information can be provided in a parallel and concurrent manner to many locations/devices and/or users.

US 2005/0155043 A1 describes a system and method for providing a graphical human-machine interface ("HMI") for a machine having controllable parts. The system and method implement an HMI in real time using a standard browser over a network. The system and method permits remote users to make modifications to the HMI and to the control status of the machine.

It is an object of the present invention to obviate or mitigate at least one problem of the prior art, whether identified herein or elsewhere, or to provide an alternative to existing apparatus or methods.

According to a first aspect of the present invention, there is provided an industrial apparatus of the type used in a product packaging facility arranged to pack one or more products into one or more packs, the apparatus comprising: a device configured to perform an operation on at least some of the packs as the packs are transported past the device; a controller arranged to control the apparatus, the controller providing a user interface for the apparatus; a communications link providing bi-directional communication between the controller and a remote device. The controller is configured to: receive a command from the user interface indicating a request to initiate a remote support session; initiate the remote support session by establishing a communications session between the controller and the remote device; and receive data from the remote device in the communications session to provide remote support for the apparatus.

In this way, a remote support communications session may be initiated from the industrial apparatus itself, thereby increasing the efficiency of remote support provision for the industrial apparatus. The industrial apparatus may take the form of any device which is used in a product packaging facility to package products into packs and/or to apply data to the packs. As such, examples of industrial apparatus include industrial printers (e.g. thermal transfer overprinters (TTO), ink jet printers (including but not limited to continuous ink jet printers), labelling machines and print and apply labelling machines.

By providing a user with a mechanism to initiate the remote support session from the industrial apparatus a convenient support mechanism is provided. In particular, whereas heretofore an operator of the industrial apparatus may have been required to initiate a support session by telephoning or otherwise contacting a remote support provider separately and remote from the apparatus of interest, apparatus in accordance with some embodiments described herein allows a more integrated approach where the industrial apparatus itself is used for the establishment of the support session. Such an approach increases efficiency as a user is no longer required to make use of a telephone or desktop computer to initiate the support session.

As will be described in further detail herein, in some embodiments, the remote support session may be arranged such that a remote support operative (i.e. an individual providing the remote support) is able to communicate with an operator of the industrial apparatus. This may be achieved by providing communication functionality (e.g. voice and/or video communication functionality) to the industrial apparatus and using this communication functionality during the remote support session. Again, such an approach provides increased levels of overall integration as an operator of the industrial apparatus is then able to communicate with the remote support operative without leaving the industrial apparatus. As well as increasing efficiency, such an approach allows more effective support to be provided as the operator of the industrial apparatus can interact with the industrial device during the remote session and while communicating with the remote support operative.

Additionally or alternatively, in some embodiments the remote support session may be arranged such that the remote support operative is provided with a user interface for the industrial apparatus from which he or she is able to control the industrial apparatus. Such an approach may enhance support by allowing the remote support operative to directly affect operation of the industrial apparatus.

The user interface provided by the controller may be a local user interface. That is, the user interface provided by the controller may be presented for use at a controller device local to the industrial apparatus. For example the local user interface may be presented on a touch screen display located adjacent to the industrial apparatus. To initiate the remote support session the controller may be configured to transmit a remote user interface from the industrial apparatus to the remote device.

To initiate the remote support session, the controller may be further configured to generate the remote user interface.

The local user interface may comprise a plurality of components, and to generate the remote user interface the controller may be configured to generate computer program code for at least some of the plurality of components of the local user interface.

To generate the computer program code for at least some of the plurality of components the controller may be configured to generate computer program code for each of a plurality of components visible in the local user interface. For example, where the local user interface comprises a plurality of components (for example windows, controls, etc), some of which are visible and others of which are not visible, the controller may be configured to generate computer program code only for those components which are currently visible.

Each component of the plurality of components of the local user interface may be adapted to generate computer program code for representing that component in the remote user interface. For example, at least some of the components of the local user interface (i.e. at least some of the plurality of components) may be adapted to generate HTML code to represent those components in the remote user interface.

The industrial apparatus may further comprise an audio input device and an audio output device. For example, the audio input device and audio output devices may be provided by a suitable headset. The remote support session may therefore comprise an audio connection between the industrial apparatus and the remote device. For example, the audio connection may operate using a Voice-Over-IP protocol. In this way, a user of the industrial apparatus can utilise voice communication during the remote support session to enhance the remote support session.

The industrial apparatus may further comprise a video camera. The remote support session may therefore comprise a video connection between the industrial apparatus and the remote device. In this way, a user of the industrial apparatus can utilise video communication during the remote support session to enhance the remote support session.

The controller may be configured to receive an indication of an interaction with the remote user interface and to update the local user interface in response to the interaction with the remote user interface. Similarly, the controller may be adapted to receive an indication of an interaction with the local user interface and to update the remote user interface in response to the interaction with the local user interface. Indeed, any changes made to, or interactions with, either the remote user interface or the local user interface can be reflected in the other of the local user interface or the remote user interface, thereby avoiding conflicting interactions with the remote user interface and the local user interface.

According to a second aspect of the present invention, there is provided a method for providing a remote support system for an industrial apparatus of the type used in a product packaging facility arranged to pack one or more products into one or more packs, comprising: providing a user interface for the apparatus; receiving a command from the user interface indicating a request to initiate a remote support session; initiating the remote support session by establishing a communications session between the controller and a remote device; receiving data from the remote device in the communications session to provide remote support for the apparatus.

The method may further comprise modifying operation of the industrial apparatus in response to receiving data from the remote device.

According to a third aspect of the present invention, there is provided a system for providing remote support to an industrial apparatus comprising an industrial apparatus of the first aspect at a first location, and at least one remote device at a second location, distinct from and remote to the first location.

According to fourth aspect of the present invention, there is provided a method of providing support for a printer comprising: providing an industrial printer system at a first location, the industrial printer system comprising a first interface; and providing a second interface at a second location remote from the first location, wherein the second interface provides a substantially exact copy of the first interface in substantially real time, such that a change in one of the interfaces is substantially instantaneously reflected in the other interface.

The industrial printer system may be a thermal transfer printer, a continuous inkjet printer, or a label applicator.

The connection may be provided by the internet. The method may further comprise providing a voice over internet protocol between the first interface and the second interface to allow a user of the industrial printer to speak with a support person located at the second interface. The method may further comprise providing a video camera operably connected to the industrial printer and providing a video connection between the video camera and the second interface to allow a support person at the second interface see through the video camera.

The method may further comprise providing a user of one interface an indication of an update from the other interface.

The method may further comprise allowing a user to force the interfaces into a certain mode if a fault is detected. For example, where a user detects a fault with the industrial printer, that user may force the second interface into an operable mode to initiate a remote support session.

The method may further comprise providing a plurality of connected interfaces. In this way, a plurality of users can interact with the industrial printer at one time. Each of the plurality of interfaces may provide a substantially exact copy of the first interface in substantially real-time, such that a change in one of the interfaces is reflected in the others of the plurality of interfaces.

The method may further comprise allowing a user to see which of the plurality of interfaces are currently active at a point in time.

According to a fifth aspect of the present invention, there is provided a remote support system for a printer comprising: an industrial printer system at a first location, the industrial printer system comprising a first interface; and a second interface at a second location remote from the first location, wherein the second interface provides a substantially exact copy of the first interface in substantially real time, such that a change in one of interfaces is substantially instantaneously reflected in the other interface.

It will be appreciated that features presented in the context of one aspect of the present invention in the preceding and following description can equally be applied to other aspects of the invention.

It will be appreciated that aspects of the present invention can be implemented in any convenient way including by way of suitable hardware and/or software. For example, a device arranged to implement the invention may be created using appropriate hardware components. Alternatively, a programmable device may be programmed to implement embodiments of the invention. The invention therefore also provides suitable computer programs for implementing aspects of the invention. Such computer programs can be carried on suitable carrier media including tangible carrier media (e.g. hard disks, CD ROMs and so on) and intangible carrier media such as communications signals.

Embodiments of the present invention are now described by way of example only, with reference to the accompanying Figures, in which:
Figure 1 is a schematic illustration of a remote support system in accordance with the present invention;
Figure 2a is a schematic illustration of components suitable for implementing a remote device in the remote support system of Figure 1;
Figure 2b is a schematic illustration of components suitable for implementing an printer in the remote support system of Figure 1;
Figure 3 is a schematic illustration of logical components suitable for implementing a remote support system of Figure 1;
Figure 4 is a schematic illustration of classes provided by a local interface application in the remote support system of Figure 1;
Figure 5 is a flowchart showing processing carried out by the local interface application to generate HTML for use in providing a remote interface application; and
Figure 6 is a flowchart showing processing carried out in the remote support system of Figure 1 to provide a remote interface application.

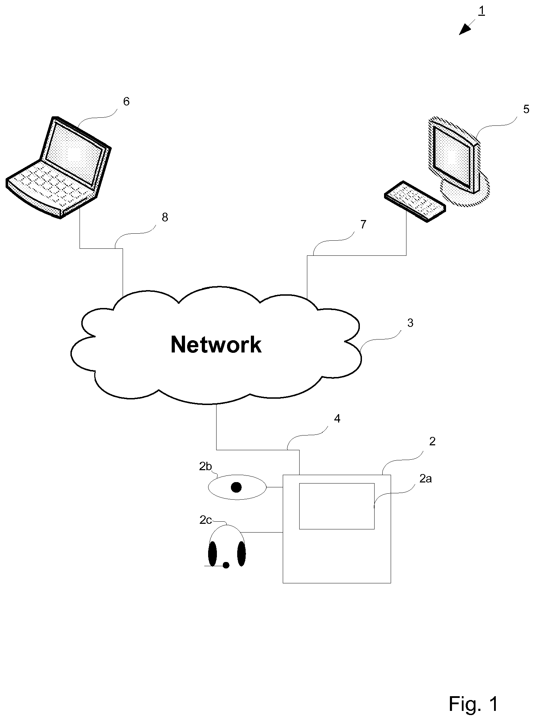

Referring to Figure 1, there is shown a remote support system 1, comprising a printer 2. The printer 2 may be an industrial printer such as a thermal transfer printer or an inkjet printer. Additionally, it will be readily apparent from the teaching herein that the remote support system 1 is also applicable to other industrial packaging apparatus such as coding machines or labelling machines. For conciseness, the term printer is used herein to refer to all forms of industrial packaging apparatus that could form part of the remote support system 1. The printer 2 comprises a local user interface device in the form of a touch-screen display 2a by means of which a user within the locality of the printer 2 (for example on a production line in which the printer 2 is being used) can interact with a local user interface software application provided by the printer 2. The local user interface device of the printer 2 may, of course, comprise any type or combination of user interface devices (such as keyboard, mouse, voice input device, gesture input device, etc). For example, in Figure 1, the printer 2 is shown to further comprise a camera 2b and a headset 2c, the headset 2c including headphones and a microphone.

The printer 2 is connected to a network 3 via a connection 4. Remote client computers 5, 6 are also connected to the network 3 via respective connections 7, 8. In this way, the remote client computers 5, 6 are able to transmit data to and receive data from the printer 2 via the network 3. Additionally, where provided, a user of the printer 2 is able to communicate with users of the client computers 5, 6 visually by means of the camera 2b, and orally/aurally by means of the headset 2c. Each client computer 5, 6 can take any appropriate form, for example, laptop computers, desktop computers, tablet computers, smartphones etc. Further, while in Figure 1, the printer 2 is connected to remote clients 5, 6 via the network 3, it will be appreciated that direct connections may be provided between the printer 2 and both or either of the remote clients 5, 6, and that each of the connections 4, 8, 7 may be wired or wireless connections.

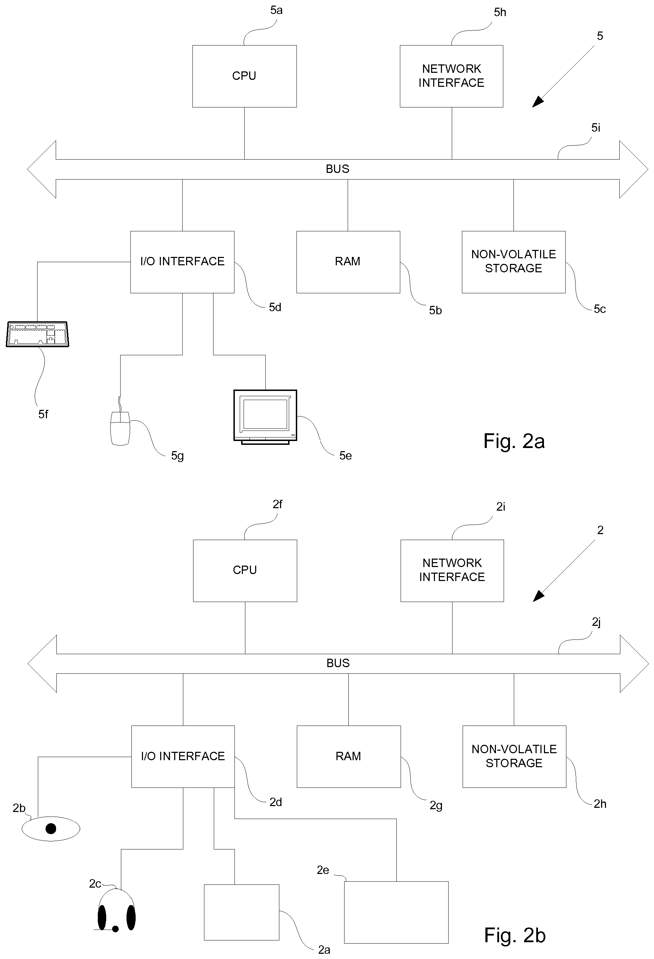

Referring to Figure 2a there is shown a schematic illustration of example components which may be used to implement the remote client computer 5. It can be seen that the client computer 5 comprises a CPU 5a which is configured to read and execute instructions stored in a volatile memory 5b which takes the form of a random access memory. The volatile memory 5b stores instructions for execution by the CPU 5a and data used by those instructions.

The client computer 5 further comprises non-volatile storage 5c, which may, for example, take the form of a hard disc drive or solid state drive. The client computer 5 further comprises an I/O interface 5d to which are connected peripheral devices used in connection with the client computer 5. More particularly, a display 5e is configured so as to display output from the client computer 5. Input devices are also connected to the I/O interface 5d. Such input devices include a keyboard 5f and a mouse 5g which allow user interaction with the client computer 5. A network interface 5h allows the client computer 5 to be connected to an appropriate computer network, such as the network 3, so as to receive and transmit data from other computing devices and the printer 2. The CPU 5a, volatile memory 5b, hard disc drive 5c, I/O interface 5d, and network interface 5h, are connected together by a bus 5i. It will be appreciated that the client computer 6 may be implemented similarly to that of the client computer 5.

Referring to Figure 2b, it can be seen that the printer 2 may also be implemented in a manner similar to that of the client computers 5, 6. That is, the display 2a, camera 2b and headset 2c are connected to an I/O interface 2d of the printer 2. Printing means 2e are also connected to the I/O interface 2d. The printer 2 further comprises a CPU 2f which is configured to read and execute instructions stored in a volatile memory 2g of the printer 2 (e.g. instructions configured to provide the local user interface application). The printer 2 further comprises non-volatile storage 2h for storage of data. A network interface 2i allows the printer 2 to be connected to an appropriate computer network, such as the network 3, so as to receive and transmit data from other computing devices such as the client computers 5, 6. The CPU 2f, volatile memory 2g, non-volatile memory 2h, I/O interface 2d, and network interface 2i, are connected together by a bus 2j.

It is to be appreciated that the components illustrated in Figures 2a, 2b are merely exemplary, and that the printer 2 and the client computers 5, 6 may be realised using any appropriate components as will be readily apparent to the skilled person.

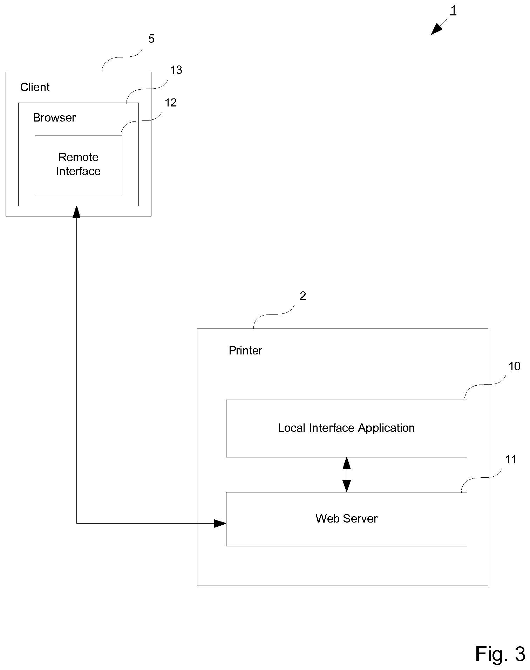

Referring to Figure 3, there is schematically illustrated logical software components run on the printer 2 and client computer 5 of the remote support system 1. For clarity, the client computer 6 is not shown in Figure 3. As indicated above, the printer 2 is configured to provide a local user interface 10 for use by users within the locality of the printer 2. The printer 2 is further configured to provide a communication server component 11. The communication server 11 is configured to obtain data from the local interface application 10 and to send and receive data from the client computers 5, 6 over the network 3. In the presently described embodiment, the communication server 11 is a web server, configured to provide an HTML user interface 12 to the client computers 5, 6. It can be seen that the client computer 5 is configured to provide a web browser 13 to allow a user of the client computer 5 to communicate with the web server 11. In particular, a user of the client computer 5 interacts with the browser 13 to request the remote user interface 12 from the web server 11, and to interact with the remote user interface 13 to affect operation of the printer 2. In the presently described example, the printer 2 is configured to operate a Microsoft Windows operating system, such that the local interface application 10 and web server 11 are appropriately configured for operation on the Microsoft Windows operating system. It will be appreciated, however, that the printer 2 may run, and the local interface application 10 and web server 11 operate on, any appropriate operating system.

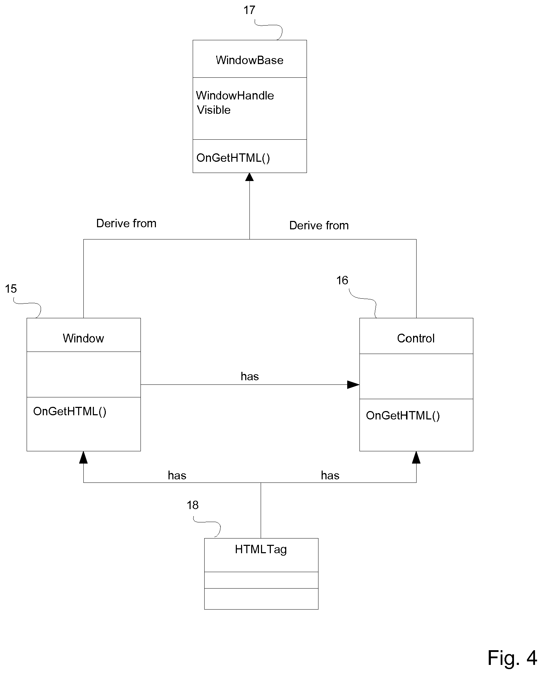

Figure 4 schematically illustrates classes of the local interface application 10, simplified for clarity. A Window class 15 is provided for creating windows within the local interface application 10, while a Control class 16 is provided for creating controls within a window (such as buttons, drop down menus, etc) for display to a user. An instance of the Window class 15 may comprise one or more instances of the Control class 15 (e.g. a single window may comprise a plurality of buttons, an edit box and a drop down menu). While a single Window class 15 and a single Control class 16 are shown in Figure 4, it will be appreciated that there may be a plurality of window classes (for the creation of different types of windows) and a plurality of control classes (for the creation of different types of controls). The Window class 15 and the Control class 16 each derive from a WindowBase class 17. The WindowBase class 17 comprises an attribute 'WindowHandle', which provides a handle (i.e. an abstract reference) for instances of the Window class 15 and Control class 16 (it being appreciated that the WindowBase class 17 is intended for instantiation).

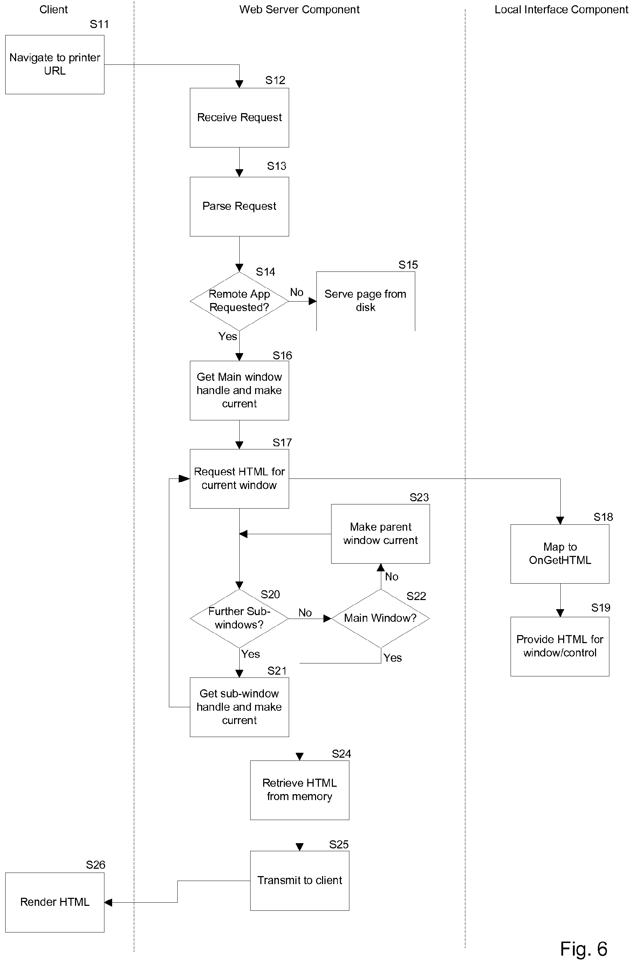

The web server 11 uses the WindowHandle attribute to reference instances of the Window class 15 and Control class 16 as described in further detail below with reference to Figure 6. The WindowBase class 17 further comprises a Visible attribute for storing an indication of whether an instance of the Window class 15 or Control class 16 is currently visible within the local interface application 10. The Visible attribute may be, for example, a Boolean. Both the Window and Control classes 15, 16 inherit an OnGetHTML function from the WindowBase class 17. The OnGetHTML function of the Window class 15 is adapted to generate an HTML representation of an instance of the Window class 15, while the OnGetHTML function of the Control class 16 is adapted to generate an HTML representation of an instance of the Control class 16. Each OnGetHTML function creates HTML tags by creating instances of an HTMLTag class 18. That is, each of the Window class 15 and the Control class 16 may comprise one or more instances of the HTMLTag class 18. The HTMLTag class 18 comprises a plurality of functions (not shown) that can be used by the OnGetHTML functions to generate and format appropriate HTML tags.

It will be appreciated that the classes illustrated in Figure 4 are merely an exemplary and illustrative subset of the classes that make up the local interface application 10, and that the Window, Control and WindowBase classes 15, 16, 17 will comprise more attributes and functions than those illustrated in Figure 3 or described above.

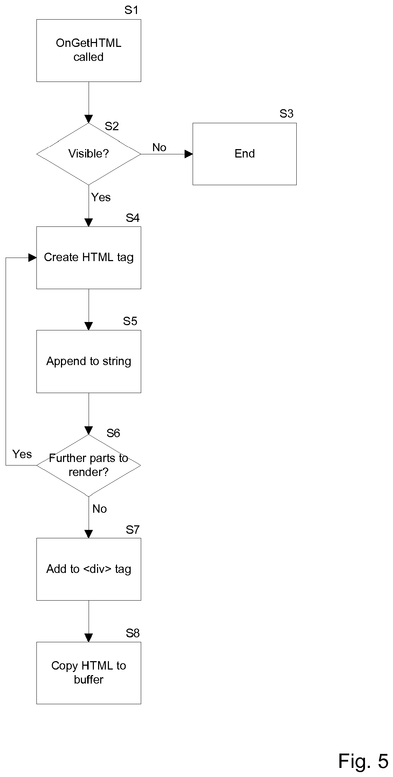

The OnGetHTML function is implemented differently for each Window class 15 and each Control class 16 so as to be able to provide appropriate HTML to represent instances of that class. A general overview of the operation of the OnGetHTML function of the Window class 15 is, however, now described with reference to Figure 5. It will be appreciated from the following description operation of the OnGetHTML function of the Control class 16 proceeds in a similar manner. Referring to Figure 5, at a step S1, the OnGetHTML function is called. On calling, the OnGetHTML function is passed a parameter indicating a location of a buffer in the memory of the printer 2 to which generated HTML code is to be written. Processing passes to step S2, at which it is determined whether the calling window is visible. It will be appreciated that if a particular window is not currently visible in the local interface application 10, that particular window is not to be displayed in the remote interface application 13, and as such, if it is determined that the calling window is not visible, processing ends at step S3.

If, on the other hand, it is determined at step S2, that the calling window instance is visible, processing passes to step S4, at which an HTMLTag object is created (i.e. an instance of the HTMLTag class 18) to provide an HTML tag to represent a first part of the window to be rendered in the remote interface application 12. Attributes and styles of the HTML tag are set using the appropriate functions of the HTMLTag class 18 to appropriately render the first part of the window. The particular way in which instances of the HTMLTag class 18 are created and configured for a particular window (or control) may vary for different states of the local interface application 10, in order to reflect the current state of the local interface application 10.

When the HTML tag has been created and configured, processing passes to step S5, at which the HTML tag is appended to a string variable stored in the memory of the printer 2. Processing passes from step S5 to step S6, at which it is determined whether any further parts of the calling window instance are to be rendered in the remote interface application 12. If it is determined that further parts of the calling window instance are to be rendered in the remote interface application 12, processing passes back to step S4, at which a further HTMLTag object is created to provide an HTML tag representing the next part to be rendered, before passing to step S5 at which the further HTML tag is appended to the string variable. Processing therefore loops between steps S4 and S6 until an HTMLTag object has been created for each part of calling window instance that is to be rendered in the remote interface application 12. When it is determined at step S6 that no further parts of the calling window instance are to be rendered in the remote interface application 12, processing passes to step S7. At step S7, a further HTMLTag object is created representing an HTML <div> tag. As will be well known by those skilled in the art, a <div> tag is used to group a plurality of elements into a 'division' or section in an HTML document. The previously created HTML tags are added to the <div> tag. Processing passes to step S8, at which the string containing the HTML code representing the parts of the calling window that are to be rendered in the remote interface application 13 are copied to the buffer location provided as a parameter to the OnGetHTML function.

An example of processing that may be carried out by the printer 2 to provide a remote user interface to the client computer 5 is now described with reference to the flowchart of Figure 6. In the processing of Figure 6 it is assumed that the printer 2 is switched on, connected to the network 3 and that both the local interface application 10 and the web server 11 are operative. At a step S11, a user of the client computer 5 enters the URL of the printer 2 into the browser 13, causing a request including the URL to be sent from the browser 13 to the web server 11. The request is received at the web server 11 at step S12. At step S13, the web server 11 parses the request to extract the URL. Processing then passes to a step S14 at which it is determined whether the remote interface application 13 has been requested. If it is determined at step S14 that the request was not for the remote application 13, (for example, the user of a client computer 5, 6 may instead have navigated the browser 13 to a user guide), processing passes from step S14 to step S15, at which the requested page (if available) is served from the memory of the printer 2.

If, however, the request is for the remote application 12, processing passes from step S14 to step S16, at which the web server obtains a handle for the main window of the local interface application 10 and assigns this as the current window. Processing passes from step S16 to step S17, at which the web server 11 transmits an HTML generation request message to the current window. The HTML generation request message includes an address and size of a buffer in the memory of the printer 2, to which HTML code is to be written. Where, as in the present example, the printer 2, local application 10 and web server 11 operate within a Microsoft Windows environment, the message may take the form of a Windows application (WM_APP) message.

At step S18, the HTML generation request message is received by the current window of the local interface application 10 (in this case the main window). The HTML generation request message is mapped to the OnGetHTML function of the current window, passing the buffer address and size information provided in the HTML generation request message as parameters to the OnGetHTML function. In the presently described embodiment operating of a Microsoft Windows environment, the WM_APP HTML generation request message may be mapped in a similar way to the way in which classes of the Microsoft Foundation Class (MFC) library maps of native Windows messages to applications written in the C++ language. Processing then passes to step S19, at which, as described above with reference to Figure 5, the OnGetHTML function generates appropriate HTML code for each part of the calling window (or control) that is to be rendered in the remote interface application 12. The generated HTML code is then stored in a string at the buffer address passed as a parameter to the OnGetHTML function at step S19.

From step S17, processing also passes to step S20, at which the web server 11 determines whether the current window has any un-traversed sub-windows (i.e. any sub-windows (or controls) to which an HTML generation request message has not been transmitted). If it is determined at step S20 that the current window does have further sub-windows, processing passes to step S21 at which the web server 11 obtains a handle for one of the further sub-windows, and makes that sub-window the current window. Processing passes from step S21 back to step S17, at which an HTML generation request message is passed to the current window (or control).

If, on the other hand, it is determined at step S20 that there are no further sub-windows (i.e. that all sub-windows of the current window have been traversed), processing passes to step S22, at which it is determined whether the current window is the main window (such that there are no further parent windows). If it is determined at step S22 that the current window is not the main window, processing passes to step S23, at which the parent of the current window is assigned as the current window. Processing then passes back to step S20. If, on the other hand, it is determined at step S22 that the current window is the main window, processing passes from step S22 to step S24 at which the HTML stored at the buffer address in the memory of the printer 2 is retrieved. It can be seen, therefore, that by the processing of steps S16 to S24, the web server 11 and the local application 10, operate to recursively generate appropriate HTML code for each window (and control) and sub-window (and sub-control) of the local interface application 10.

Processing passes from step S24 to step S25 at which the HTML code stored in the string at the buffer location is transmitted from the printer 2 to the web browser 13 of the client computer 5 for rendering in the browser 13 to provide the remote interface 12.

While the processing described above with reference to Figure 6 is initiated through use of a browser on a client computer 5, 6 to navigate to an address of the remote interface application provided by the printer 2, the provision of the remote interface application 13 may be initiated from the printer 2. Where a local user of the printer 2 wishes to receive remote support, that user may activate a remote support initiation option, for example by pressing a button provided by the local interface application 10 on the touch screen 2a. In response to receiving an indication that the remote support initiation option has been selected, the local interface application 10 and web server 11 are operable to initiate a remote support session with, for example, the client device 5, to cause the client device 5 to initiate the browser 13, and to generate and transmit the remote interface application 12 for display in the browser 13.

Once displayed in the browser 13, the remote interface application 12 can be used by a user of the client computer 5 to affect operation of the printer 2. Interaction with components of the remote user interface application 12, causes requests to be sent to the web server 11. The web server 11 is configured to parse received requests and, where appropriate, to affect operation of the local interface application 10. For example, user interactions with controls in the remote user interface 12 (those controls corresponding to controls in the local user interface 10), cause the browser 13 to request an 'event.html' web page from the server 11. An interaction may be, for example, a 'click' event (e.g. on a button, or sub-window), an 'item selection' event (e.g. from a list), an 'edit box' event (e.g. activation of an edit box) or a 'key' event (e.g. entry of data using a keyboard). Each request for the event.html web page includes the handle of the window in the local application 10 corresponding to the window in the remote application 13 from which the event originated.

Additionally, upon a 'click' event, the request for the event.html web page provides the coordinates of the click within the window in which the click event originated. These coordinates are passed by the web server 11 to the local interface application 10 to ensure that the click event is reflected in the local interface application 10. Upon an 'item selection' event, the event.html request additionally provides the index of a selected item in the list from which the item was selected, again to be provided by the web server 11 to the local application 10 to ensure that the item selection is reflected local application 10. Upon a 'key' event, the event.html request additionally provides the text string from the currently selected 'edit box' into which the text string was entered, to update the corresponding edit box in the local application 10.

In this way, it will be appreciated that interactions with the remote interface application 12 are updated substantially instantly within the local interface application 10 (within the constraints of the speed of data transfer provided by the connections between the remote client computer and the printer 2). Similarly, the web server 11 is configured to listen for events occurring within the local user application 10, and in response to detection of such interaction events, to cause new HTML to be provided for updating of the remote interface application 13. That is, for example, where a local user of the printer 2 clicks a button in the local user interface 10 which causes the local user interface 10 to display a new window, the click event is detected by the web server 11 which sends HTML request messages to the visible components of the local application 10 to cause calls to be made to those corresponding OnGetHTML functions of those components. In this way, the states of the remote interface application 13 and the local interface application 10 are maintained in synchrony.

By use of the headset 2c, and optionally the camera 2a, the remote support system 1 further provides the ability to avoid downtime caused by the physical distance between the printer 2 and a telephone which a local user requires to speak to and gain support advice from a remote user. This is achieved by combining the remote interface application 13 described above with a mechanism to simultaneously utilise the Voice Over Internet Protocol (VoIP) to enable the user to speak directly to the remote support engineer from the printer 2 itself, without the need for a separate telephone. The headset 2c is typically a microphone and headphones. A typical example is a Bluetooth headset. The printer 2 may further be equipped with appropriate software to enable a VoIP connection between the printer 2 and the remote devices 5, 6, simultaneously with the remote interface application 13 described above. Thus, equipped with the headset 2c, the local user of the printer 2, and a user of a remote client computer 5, 6 can not only control the industrial printer 2 together in real time, but also talk at the same time.

Additionally, remote support in the remote support system 1 may be further enhanced by the provision, in real time, of a video stream from the location of the printer 2 to the user of a remote client computer 5, 6, by way of the camera 2b, to further enhance the capacity to offer fast and effective support. The camera 2b may be provided in the headset 2c, such that a user of the remote client computer 5, 6 is able to see, in real-time a "point of view" video stream from the user of the printer 2. The camera 2c may be of the type referred to commonly as a "webcam". Where the camera 2b is provided as part of the headset 2c, the wired or wireless communication means between the headset 2c and the industrial printer 2 includes the means to transmit the video stream from the webcam to the industrial printer 2, which in turn relays the video stream to the remote client computers 5, 6 via the network 3.

The features described above therefore advantageously allow a local user of the printer 2 to initiate and partake in an enhanced remote support session with a user of a client device 5, 6 from the printer 2 itself, without the need to seek out further devices, or communication means which may result in a breaking of communication with a user providing remote support.

Embodiments of the present invention have been described above and it will be appreciated that the embodiments described are in no way limiting. Indeed, many variations to the described embodiments will be apparent to an ordinary skilled person, and such variations are within the scope of the present invention.

## Claims

1. Industrial apparatus (2) of the type used in a product packaging facility, the facility being arranged to pack one or more products into one or more packs, whereby the apparatus is arranged to perform an operation on at least one of said packs, the apparatus comprising:
a device (2e) configured to perform an operation on at least some of the packs as the packs are transported past the device;
a controller (11) arranged to control the apparatus and to provide a local user interface (10) for the apparatus, wherein the local user interface comprises a plurality of components, which comprises visible component(s) and invisible component(s);
a communications link providing bi-directional communication between the controller (11) and a remote device (5; 6);
wherein the controller (11) is configured to:
receive a command from the local user interface indicating a request to initiate a remote support session;
initiate the remote support session by:
establishing a communications session between the controller and the remote device;
generating a remote user interface (12); and
transmitting the remote user interface from the industrial apparatus to the remote device; and
receive data from the remote device in the communications session to provide remote support for the apparatus; **characterized in that** to generate the remote user interface the controller is configured to generate computer program code only for the visible component(s); and
wherein each visible component of the plurality of components of the local user interface is adapted to generate computer program code for representing that component in the remote user interface.

2. The industrial apparatus of claim 1, wherein the computer program code is HTML code.

3. The industrial apparatus of any preceding claim, further comprising an audio input device and an audio output device, wherein the remote support session comprises audio communication between the industrial apparatus and the remote device.

4. The industrial apparatus of any preceding claim, further comprising a video camera (2b), wherein the remote support session comprises video communication between the industrial apparatus and the remote device.

5. The industrial apparatus of any preceding claim, wherein:
the controller is configured to receive an indication of an interaction with the remote user interface (12) and to update the local user interface (10) in response to the interaction with the remote user interface.

6. The industrial apparatus of any preceding claim, wherein:
the controller is adapted to receive an indication of an interaction with the local user interface (10) and to update the remote user interface (12) in response to the interaction with the local user interface.

7. A method for providing a remote support system for an industrial apparatus (2) of the type used in a product packaging facility, the facility being arranged to pack one or more products into one or more packs and the apparatus being arranged to perform an operation on at least one of said packs, the method comprising:
providing a local user interface (10) for the apparatus, wherein the local user interface comprises a plurality of components, which comprises visible component(s) and invisible component(s);
receiving a command from the local user interface indicating a request to initiate a remote support session;
initiating the remote support session by:
establishing a bi-directional communications session between a controller (11) of the apparatus and a remote device (5; 6);
generating a remote user interface (12); and
transmitting the remote user interface from the industrial apparatus to the remote device; and
receiving data from the remote device in the communications session to provide remote support for the apparatus; **characterized in that** generating the remote user interface comprises generating computer program code only for the visible component(s); and
wherein each visible component of the plurality of components of the local user interface is adapted to generate computer program code for representing that component in the remote user interface.

8. A method according to claim 7, further comprising:
modifying operation of the industrial apparatus in response to receiving data from the remote device.

9. A computer program comprising computer readable instructions configured to cause a computer to carry out a method according to claim 7 or 8.

10. A computer readable medium carrying a computer program according to claim 9.

## Patentansprüche

1. Industrievorrichtung (2) des Typs, der in einer Produktverpackungsanlage verwendet wird, wobei die Anlage angeordnet ist, um ein oder mehrere Produkte in eine oder mehrere Verpackungen zu verpacken, wodurch die Vorrichtung angeordnet ist, um eine Operation auf mindestens eine der Verpackungen auszuführen, wobei die Vorrichtung umfasst:
eine Vorrichtung (2e), welche konfiguriert ist, um eine Operation auf mindestens einige der Verpackungen auszuführen, während die Verpackungen längs der Vorrichtung transportiert werden;
eine Steuerung (11), welche angeordnet ist, um die Vorrichtung zu steuern und eine lokale Benutzerschnittstelle (10) für die Vorrichtung bereitzustellen, wobei die lokale Benutzerschnittstelle eine Mehrzahl von Komponenten umfasst, welche eine oder mehrere sichtbare Komponenten und eine oder mehrere unsichtbare Komponenten umfasst;
eine Kommunikationsverbindung, welche eine bidirektionale Kommunikation zwischen der Steuerung (11) und einer entfernten Vorrichtung (5; 6) bereitstellt;
wobei die Steuerung (11) konfiguriert ist, um Folgendes auszuführen:
Empfangen eines Befehls von der lokalen Benutzerschnittstelle, welcher eine Anforderung angibt, eine entfernte Unterstützungssitzung zu initiieren;
Initiieren der entfernten Unterstützungssitzung durch:
Erstellen einer Kommunikationssitzung zwischen der Steuerung und der entfernten Vorrichtung;
Erzeugen einer entfernten Benutzerschnittstelle (12); und
Übertragen der entfernten Benutzerschnittstelle von der Industrievorrichtung an die entfernte Vorrichtung; und
Empfangen von Daten von der entfernten Vorrichtung in der Kommunikationssitzung, um eine entfernte Unterstützung für die Vorrichtung bereitzustellen; **dadurch gekennzeichnet, dass**
um die entfernte Benutzerschnittstelle zu erzeugen, die Steuerung konfiguriert ist, um einen Computerprogrammcode nur für die eine oder die mehreren sichtbaren Komponente zu erzeugen; und
wobei jede sichtbare Komponente der Mehrzahl von Komponenten der lokalen Benutzerschnittstelle angepasst ist, um einen Computerprogrammcode zu erzeugen, um diese Komponente in der entfernten Benutzerschnittstelle darzustellen.

2. Industrievorrichtung nach Anspruch 1, wobei der Computerprogrammcode HTML-Code ist.

3. Industrievorrichtung nach einem der vorhergehenden Ansprüche, ferner umfassend eine Audioeingabevorrichtung und eine Audioausgabevorrichtung, wobei die entfernte Unterstützungssitzung eine Audiokommunikation zwischen der Industrievorrichtung und der entfernten Vorrichtung umfasst.

4. Industrievorrichtung nach einem der vorhergehenden Ansprüche, ferner umfassend eine Videokamera (2b), wobei die entfernte Unterstützungssitzung eine Videokommunikation zwischen der Industrievorrichtung und der entfernten Vorrichtung umfasst.

5. Industrievorrichtung nach einem der vorhergehenden Ansprüche, wobei:
die Steuerung konfiguriert ist, um eine Angabe einer Interaktion mit der entfernten Benutzerschnittstelle (12) zu empfangen und die lokale Benutzerschnittstelle (10) als Reaktion auf die Interaktion mit der entfernten Benutzerschnittstelle zu aktualisieren.

6. Industrievorrichtung nach einem der vorhergehenden Ansprüche, wobei:
die Steuerung angepasst ist, um eine Angabe einer Interaktion mit der lokalen Benutzerschnittstelle (10) zu empfangen und die entfernte Benutzerschnittstelle (12) als Reaktion auf die Interaktion mit der lokalen Benutzerschnittstelle zu aktualisieren.

7. Verfahren zum Bereitstellen eines entfernten Unterstützungssystems für eine Industrievorrichtung (2) des Typs, der in einer Produktverpackungsanlage verwendet wird, wobei die Anlage angeordnet ist, um ein oder mehrere Produkte in eine oder mehrere Verpackungen zu verpacken, und die Vorrichtung angeordnet ist, um eine Operation auf mindestens eine der Verpackungen auszuführen, wobei das Verfahren umfasst:
Bereitstellen einer lokalen Benutzerschnittstelle (10) für die Vorrichtung, wobei die lokale Benutzerschnittstelle eine Mehrzahl von Komponenten umfasst, welche eine oder mehrere sichtbare Komponenten und eine oder mehrere unsichtbare Komponenten umfassen;
Empfangen eines Befehls von der lokalen Benutzerschnittstelle, welcher eine Anforderung angibt, eine entfernte Unterstützungssitzung zu initiieren;
Initiieren der entfernten Unterstützungssitzung durch:
Erstellen einer bidirektionalen Kommunikationssitzung zwischen einer Steuerung (11) der Vorrichtung und einer entfernten Vorrichtung (5; 6);
Erzeugen einer entfernten Benutzerschnittstelle (12); und
Übertragen der entfernten Benutzerschnittstelle von der Industrievorrichtung an die entfernte Vorrichtung; und
Empfangen von Daten von der entfernten Vorrichtung in der Kommunikationssitzung, um eine entfernte Unterstützung für die Vorrichtung bereitzustellen; **dadurch gekennzeichnet, dass**
das Erzeugen der entfernten Benutzerschnittstelle das Erzeugen von Computerprogrammcode nur für die sichtbare eine oder mehreren Komponenten umfasst; und
wobei jede sichtbare Komponente der Mehrzahl von Komponenten der lokalen Benutzerschnittstelle angepasst ist, um Computerprogrammcode zu erzeugen, um die Komponente in der entfernten Benutzerschnittstelle darzustellen.

8. Verfahren nach Anspruch 7, ferner umfassend:
Modifizieren des Betriebs der Industrievorrichtung als Reaktion auf das Empfangen von Daten von der entfernten Vorrichtung.

9. Computerprogramm, umfassend computerlesbare Anweisungen, welche konfiguriert sind, um zu veranlassen, dass ein Computer ein Verfahren nach einem der Ansprüche 7 oder 8 ausführt.

10. Computerlesbares Medium, welches ein Computerprogramm nach Anspruch 9 speichert.

## Revendications

1. Appareil industriel (2) du type utilisé dans une installation d'emballage de produit, l'installation étant prévue pour emballer un ou plusieurs produits en un ou plusieurs colis, moyennant quoi l'appareil est prévu pour réaliser une opération sur au moins un desdits colis, l'appareil comprenant :
un dispositif (2e) configuré pour réaliser une opération sur au moins certains des colis quand les colis sont transportés au-delà du dispositif ;
un système de commande (11) prévu pour commander l'appareil et fournir une interface utilisateur locale (10) pour l'appareil, dans lequel l'interface utilisateur locale comprend une pluralité de composants, qui comprend un(des) composant(s) visible(s) et un(des) composant(s) invisible(s) ;
une liaison de communications fournissant une communication bidirectionnelle entre le système de commande (11) et un dispositif distant (5 ; 6) ;
dans lequel le système de commande (11) est configuré pour :
recevoir une commande de l'interface utilisateur locale indiquant une demande de lancer une session de support à distance ;
lancer la session de support à distance en :
établissant une session de communications entre le système de commande et le dispositif distant ;
générant une interface utilisateur distante (12) ; et
transmettant l'interface utilisateur distante de l'appareil industriel au dispositif distant ; et
recevoir des données du dispositif distant dans la session de communications pour fournir un support distant pour l'appareil ; **caractérisé en ce que** :
pour générer l'interface utilisateur distante, le système de commande est configuré pour générer un code de programme informatique uniquement pour le/les composant(s) visible(s) ; et
dans lequel chaque composant visible de la pluralité de composants de l'interface utilisateur locale est conçu pour générer un code de programme informatique visant à représenter ce composant dans l'interface utilisateur distante.

2. Appareil industriel selon la revendication 1, dans lequel le code de programme informatique est un code HTML.

3. Appareil industriel selon l'une quelconque des revendications précédentes, comprenant en outre un dispositif d'entrée audio et un dispositif de sortie audio, dans lequel la session de support distant comprend une communication audio entre l'appareil industriel et le dispositif distant.

4. Appareil industriel selon l'une quelconque des revendications précédentes, comprenant en outre une caméra vidéo (2b), dans lequel la session de support distant comprend une communication vidéo entre l'appareil industriel et le dispositif distant.

5. Appareil industriel selon l'une quelconque des revendications précédentes, dans lequel :
le système de commande est configuré pour recevoir une indication d'une interaction avec l'interface utilisateur distante (12) et pour mettre à jour l'interface utilisateur locale (10) en réponse à l'interaction avec l'interface utilisateur distante.

6. Appareil industriel selon l'une quelconque des revendications précédentes, dans lequel :
le système de commande est conçu pour recevoir une indication d'une interaction avec l'interface utilisateur locale (10) et à mettre à jour l'interface utilisateur distante (12) en réponse à l'interaction avec l'interface utilisateur locale.

7. Procédé de fourniture d'un système de support distant pour un appareil industriel (2) du type utilisé dans une installation d'emballage de produit, l'installation étant prévue pour emballer un ou plusieurs produits en un ou plusieurs colis et l'appareil étant prévu pour réaliser une opération sur au moins un desdits colis, le procédé comprenant :
la fourniture d'une interface utilisateur locale (10) pour l'appareil, dans lequel l'interface utilisateur locale comprend une pluralité de composants, qui comprennent un(des) composant(s) visible(s) et un(des) composant(s) invisible(s) ;
la réception d'une commande de l'interface utilisateur locale indiquant une demande de lancer une session de support à distance ;
le lancement de la session de support à distance en :
établissant une session de communications bidirectionnelle entre un système de commande (11) de l'appareil et un dispositif distant (5 ; 6) ;
générant une interface utilisateur distante (12) ; et
transmettant l'interface utilisateur distante de l'appareil industriel au dispositif distant ; et
la réception de données du dispositif distant dans la session de communications pour fournir un support distant pour l'appareil ; **caractérisé en ce que** :
la génération de l'interface utilisateur distante comprend la génération d'un code de programme informatique uniquement pour le(les) composant(s) visible(s) ; et
dans lequel chaque composant visible de la pluralité de composants de l'interface utilisateur locale est conçu pour générer un code de programme informatique permettant de représenter ce composant dans l'interface utilisateur distante.

8. Procédé selon la revendication 7, comprenant en outre :
la modification du fonctionnement de l'appareil industriel en réponse à la réception de données en provenance du dispositif distant.

9. Programme informatique comprenant des instructions lisibles sur ordinateur configuré pour amener un ordinateur à exécuter un procédé selon la revendication 7 ou 8.

10. Support lisible sur ordinateur portant un programme informatique selon la revendication 9.
